# EUROPÄISCHE PATENTSCHRIFT

(11) **EP 3 501 912 B1**
(45) Veröffentlichungstag und Bekanntmachung des Hinweises auf die Patenterteilung: **09.09.2020**
(21) Anmeldenummer: 18212150.9
(22) Anmeldetag: 13.12.2018
(51) Int. Cl.: B60R 21/205, B62D 65/02, B60R 21/2165

(54) **VERFAHREN ZUR POSITIONIERUNG VON FLÄCHIGEN MATERIALIEN AUF TRÄGERTEILEN**
METHOD FOR POSITIONING OF FLAT MATERIALS ON SUPPORT PARTS
PROCÉDÉ DE POSITIONNEMENT DES MATÉRIAUX PLANS SUR DES PIÈCES DE SUPPORT

(30) Priorität: 21.12.2017 DE 102017131017
(43) Veröffentlichungstag der Anmeldung: 26.06.2019
(73) Patentinhaber: Eissmann Automotive Deutschland GmbH, 72574 Bad Urach (DE)
(72) Erfinder: Wolf, Achim, 72581 Dettingen (DE)
(74) Vertreter: Mammel und Maser

(56) Entgegenhaltungen:
- DE-A1-102011 078 789
- DE-A1-102014 104 906
- JP-A- 2001 233 164
- US-A1- 2015 130 169

## Beschreibung

Die vorliegende Erfindung betrifft ein Verfahren zur Positionierung von flächigen Materialien, insbesondere flächigen Dekormaterialien, auf Trägerteilen im Fahrzeugbau. Derartige Verfahren kommen regelmäßig, zum Beispiel beim Kaschieren von Dekormaterialien wie Leder auf Trägerteilen wie Instrumententafeln oder Airbagklappen, zum Einsatz.

Airbags sind heutzutage in Kraftfahrzeugen an verschiedenen Stellen, zum Beispiel in Lenkrädern, Armaturenbrettern, Türen, Sitzen, Dachverkleidungen usw., integriert. Der Airbag tritt im Allgemeinen nach Öffnung der Airbagklappe durch den Schusskanal aus. Für eine zuverlässige Funktionsweise des Airbags ist es notwendig, dass die sich oberhalb der Airbagklappe befindliche Abdeckung Materialschwächungen, sog. Sollbruchstellen, aufweist.

Aus Designgründen soll ein in der Instrumententafel integrierter Airbag auf der dem Insassen zugewandten Seite hin unsichtbar gestaltet sein. Dazu wird die Instrumententafel mit der darin integrierten Airbagklappe mit einem flächigen Dekormaterial als Überzugsmaterial versehen. Dieses Überzugsmaterial muss allerdings im Bereich der Umrandung der Airbagklappe ebenfalls eine Materialschwächung aufweisen, so dass ein sicheres Öffnen der Airbagklappe und die Entfaltung des Airbags bei einem Aufprall gewährleistet bleiben.

Überzugsmaterialien für Airbags sind aus unterschiedlichen Materialien bekannt, beispielsweise aus Kunststofffolien, Bezugsstoffen, Textilien, Slush, Kunstleder oder faserigen Materialien wie Naturleder. Gerade bei gehobenen Fahrzeugausstattungen wird häufig Naturleder als Überzugsmaterial gewählt.

Zur unsichtbaren Schwächung des Überzugsmaterials ist es üblich, die Schwächungen auf der Rückseite (B-Seite) des Überzugsmaterials einzubringen, so dass die Sichtseite (A-Seite) keine sichtbaren Veränderungen aufweist. So erfolgt die Erzeugung von Sollbruchstellen im Allgemeinen in die Lederrückseite in Form von Sacklöchern mittels eines Messers, einer Klinge oder eines Lasers, so dass infolge der verbleibenden Restwand die A-Seite unverletzt bleibt und die Schwächung an der A-Seite unsichtbar ist.

Um ein zuverlässiges Entfalten des Airbags sicherzustellen, ist es erforderlich, das geschwächte bzw. perforierte Überzugsmaterial sorgfältig im Bereich des Rands der Airbagklappe bzw. der Sollbruchstelle auszurichten. Hierfür muss, um die hohen Sicherheitsanforderungen bei der Herstellung dieser Bauteile zu erfüllen, viel Zeit für die Positionierung des Materials aufgewendet werden.

Die US 2015/0130169 A1 offenbart ein Verfahren nach dem Oberbegriff von Anspruch 1 mit einem mehrschichtigen Überzugsmaterial, welches nur in der untersten Schicht, also dem Airbag zugewandt, geschwächt ist und auf einem Träger mit einer Sollbruchstelle angeordnet ist. Das Überzugsmaterial ist so auf dem Träger positioniert, dass die Schwächung des Überzugsmaterials oberhalb der Sollbruchstelle liegt.

Aus der DE 10 2006 059 212 A1 und der DE 198 29 752 A1 ist bekannt, die Schwächung des Leders auf seiner B-Seite mittels optischer Methoden auszurichten.

In der DE 10 2011 078 789 B4 wurde bereits vorgeschlagen, die Schwächungen auf der B-Seite großflächig auszuführen, so dass sich die Schwächung über mehr als die Hälfte der Fläche des Überzugsmaterials erstreckt. Dadurch kann der Aufwand bzw. die Präzision beim Positionieren des Überzugsmaterials an dem Trägerteil reduziert werden, da bei einer großflächigen Schwächung auch bei einer ungenaueren Positionierung der geschwächte Abschnitt über der Umrandung der Airbagklappe zu liegen kommt. Jedoch kann bei einer großflächigen Schwächung ein definiertes Reißen des Überzugsmaterials nicht sichergestellt werden und Bruchstücke des Überzugsmaterials können unkontrolliert umherfliegen.

Aus der DE 10 2007 049 849 A1 ist eine Vorrichtung zur Ausbildung einer Nut in einem Innenverkleidungsteil bekannt. Während des Schneidens wird der Abstand zwischen der Außenseite des Innenverkleidungsteils und einem Abstandssensor gemessen, um bei Veränderungen der Position der Außenseite des Innenverkleidungsteils die Position der Schneide zu verändern.

Die WO 2010/043670 A1 lehrt ein Nahtaufreißmittel (Reißband) zum Aufreißen einer Schließnaht des Sitzbezugs eines Fahrzeugsitzes beim Auslösen eines in dem Fahrzeugsitz integrierten Airbagmoduls. Das Nahtaufreißmittel weist in seinem zweiten Endbereich ein Markierungselement auf, das beim Einnähen des Nahtaufreißmittels in die Schließnaht von einer Sensorvorrichtung erfassbar ist.

Die Aufgabe der vorliegenden Erfindung besteht darin, ein Verfahren anzugeben, das ermöglicht, ein flächiges Dekormaterial mit einer diskreten Veränderung auf der B-Seite, wie einer linienförmigen Materialschwächung, die auf der A-Seite nicht sichtbar ist, auf einfache Weise präzise und ohne optische Beeinträchtigung der A-Seite mit seiner B-Seite richtig auf einem Trägerteil zu positionieren und insbesondere, auf der B-Seite eingebrachte Materialschwächungen in Bezug auf die Airbagklappe in einem Trägerteil korrekt auszurichten.

Diese Aufgabe wird durch die Merkmale des Anspruchs 1 gelöst.

Bei dem erfindungsgemäßen Verfahren wird die Position der auf der B-Seite befindlichen Veränderung selbst oder die Position einer mit der Veränderung korrelierenden, auf der B-Seite befindlichen Markierung mittels einer kapazitiven oder induktiven Detektionsvorrichtung detektiert und die detektierte Veränderung oder Markierung in dem flächigen Dekormaterial dann in Bezug auf das Trägerteil positioniert.

Die kapazitive oder induktive Detektionsvorrichtung ermöglicht, dass die Veränderung bzw. Markierung an der B-Seite durch das Dekormaterial hindurch gemessen werden kann. Somit kann die Detektionsvorrichtung auf oder an der A-Seite des flächigen Dekormaterials angeordnet sein und dennoch die Lage der Veränderung bzw. Markierung auf der B-Seite des flächigen Dekormaterials bestimmt werden. Somit ist es erfindungsgemäß möglich, selbst bei einem auf dem Trägerteil bereits aufliegenden oder sich geringfügig oberhalb des Trägerteils befindlichen Dekormaterials die Lage der Veränderung oder Markierung genau zu bestimmen.

Die Detektion der Veränderung bzw. Markierung an der B-Seite erfolgt somit nicht unter Sicht auf die Veränderung bzw. Markierung.

Vorzugsweise ist die Position der kapazitiven oder induktiven Detektionsvorrichtung gegenüber der Position des Trägerteils fixiert, denn dann ist bei einer bestimmten Position der Detektionsvorrichtung gleichzeitig auch die korrespondierende Lage des Trägerteils bekannt. Es ist somit nur erforderlich, das flächige Material mit seinen Veränderungen bzw. Markierungen in Bezug auf die Detektionsvorrichtung zu positionieren. Ist die korrekte Position gefunden, kann das flächige Material dann gleich auf das Trägerteil kaschiert werden.

Das flächige Material, das sich in x-y-Richtung erstreckt, wird in seiner Ebene, d.h. in x-y-Richtung, parallel der Messebene der Detektionsvorrichtung unter Messung der Kapazitäten oder der Induktion verschoben, bis das gewünschte Messergebnis erzielt ist, beispielsweise alle Sensoren der Detektionsvorrichtung dieselbe oder eine maximale oder minimale Kapazität oder Induktion anzeigen. Das zu erzielende Messergebnis hängt selbstverständlich von der Anordnung und Art der kapazitiven oder induktiven Sensoren der kapazitiven oder induktiven Detektionsvorrichtung ab. Ist das gewünschte Messergebnis aller Sensoren der Detektionsvorrichtung erreicht, dann befindet(n) sich die Veränderung(en) bzw. die Markierung auf der B-Seite des flächigen Materials in Bezug auf das Trägerteil in der gewünschten Position, beispielsweise die Materialschwächung genau oberhalb der Airbagklappe. Das flächige Material kann dann in einem weiteren Schritt in dieser Position auf das Trägerteil beispielsweise kaschiert werden. Somit kann beispielsweise ein definiertes und sicheres Positionieren der Sollbruchlinie in einem flächigen Dekormaterial auf einer Instrumententafel mit einer Airbagklappe und damit letztendlich ein kontrolliertes Aufreißen des Airbags gewährleistet werden.

Das erfindungsgemäße Verfahren eignet sich jedoch auch für die richtige Positionierung von anderen auf der B-Seite von flächigen Dekormaterialien befindlichen Veränderungen wie beispielsweise Sensoren oder Sollbruchstellen, Schwächungen oder Designelementen. Ein solcher Sensor kann beispielsweise als ein in das flächige Dekormaterial integrierter Schalter eingesetzt werden.

Da die Kapazität oder die Induktion durch das flächige Material hindurch von der A-Seite aus gemessen werden kann, müssen keine Referenzmarkierungen wie Perforationen, Nähte, Aufkleber oder Aufdrucke auf der A-Seite angebracht werden, die die A-Seite schädigen oder das Design beeinflussen können.

Die mit der kapazitiven oder induktiven Detektionsvorrichtung gemessenen Positionen der Veränderungen oder Markierungen des flächigen Materials können in einer Datenverarbeitungsvorrichtung gespeichert werden, um die Position der Veränderungen oder Markierung auf der B-Seite des vermessenen flächigen Materials zu protokollieren. Es ist somit kein zusätzlicher Protokollierungsschritt erforderlich, wie es bei den aus dem Stand der Technik bekannten Kameraaufnahmen der Lage der Referenzmarkierungen der Fall ist.

Als flächige Materialien, insbesondere Überzugsmaterialien für Airbags, können unterschiedliche Materialien Verwendung finden, beispielsweise Kunststofffolien, Bezugsstoffe, Textilien, Slush, Kunstleder oder faserige Materialien wie Naturleder. Vorzugsweise wird Naturleder als Überzugsmaterial gewählt.

Die B-Seite wird mit der Veränderung und ggfs. mit der Markierung auf das Trägerteil kaschiert, die Veränderung und die ggfs. vorhandene Markierung(en) sind von der A-Seite aus im Allgemeinen unsichtbar. Nachdem die Veränderung und ggfs. Markierung auf der B-Seite des flächigen Materials verbleiben, kann nach Abschluss des Verfahrens erneut die Position der Veränderung bzw. Markierung detektiert und überprüft werden, ob die Position in Bezug zum Trägerteil korrekt ist. Dies ermöglicht auf einfache Weise ebenso eine abschließende Qualitätskontrolle. Im Rahmen dieser Erfindung ist unter einer lokal begrenzten Veränderung oder Markierung auf der B-Seite eine jede Veränderung oder Markierung zu verstehen, die eine gegenüber dem benachbarten nicht veränderten flächigen Material messbare geänderte Kapazität oder Induktion aufweist. Die durch die ein- oder aufgebrachte Veränderung oder Markierung erfolgende Kapazitäts- oder Induktionsänderung muss selbstverständlich so groß sein, dass sie mit der kapazitiven oder induktiven Detektionsvorrichtung gut detektiert werden kann.

Grundsätzlich können solche Veränderungen Materialschwächungen wie Abtragungen, insbesondere Sacklöcher, Schnitte oder Perforationen sein, sofern diese zu einer hinreichenden Kapazitäts- oder Induktionsänderung gegenüber dem benachbarten nicht geschwächten Bereich führt. Durch die Form der Materialabtragung wie Loch, Schnitt, Perforation etc. ist das Merkmal "lokal begrenzt" ebenfalls erfüllt. Im Übrigen besteht auch nur bei einer lokal begrenzten Veränderung oder Markierung das Problem der richtigen Positionierung in Bezug auf einen ebenfalls lokal begrenzten Ort auf dem Trägerteil, auf dem die Positionierung erfolgen soll.

In einer weiteren Variante können die Veränderungen auch Sensoren, insbesondere Drucksensoren, sein.

Sofern die Kapazitäts- oder Induktionsmessungen der Veränderung zu schwach sind oder die Unterschiede der Kapazitäts- oder Induktionsmesswerte an einem Ort der Veränderung im Vergleich zu einem Ort ohne Veränderung zu gering sind, können auf der B-Seite Markierungen aufgebracht werden, die in einem bestimmten Verhältnis zu den Veränderungen angeordnet sind und somit mit den Veränderungen korrelieren. Ist die Lage der Markierung bekannt, so ist ebenfalls die Lage der Veränderung bekannt und diese kann dann entsprechend auf dem Trägerteil positioniert werden.

Als Markierungen können beispielsweise auf der B-Seite aufgebrachte, verklebte oder anderweitig befestigte Aufkleber, Etiketten, Folienstücke oder aufgedruckte Beschichtungen, beispielsweise Druckfarben oder Lacke, dienen, die lokal begrenzt sind und sich von der kapazitiven oder induktiven Detektionsvorrichtung detektieren lassen.

Das Merkmal "lokal begrenzt" bedeutet, dass die Veränderung oder Markierung eine bestimmte definierte äußere Form aufweisen muss und sich die Eigenschaften der Veränderung oder Markierung gegenüber den benachbarten Bereichen "sprunghaft" ändern. Dadurch ändert sich auch die Kapazität oder Induktion sprunghaft von dem Bereich der Veränderung oder Markierung zu dem Bereich ohne Veränderung/Markierung sprunghaft, so dass die Kapazitäts- oder Induktionsänderung einfach detektiert werden kann.

Sobald die Lage des Aufdrucks oder Aufklebers auf der B-Seite des Dekormaterials detektiert ist, ist somit auch bekannt, wo die Materialschwächung liegt und wie das Dekormaterial zu positionieren ist.

Die Markierungen nebst ggfs. vorhandener Verklebung auf der B-Seite sollten eine geringe Schichtdicke aufweisen, damit sie von der A-Seite nicht sichtbar ist, denn im Allgemeinen wird die einmal auf der B-Seite des flächigen Materials aufgebrachte Veränderung bzw. Markierung vor dem Kaschieren auf dem Trägerteil ja nicht mehr entfernt.

Vorzugsweise sollte die Schichtdicke der Markierung zwischen 10 µm und 100 µm und besonders bevorzugt zwischen 30 µm und 80 µm betragen.

In einer besonders bevorzugten Ausführungsform ist die Markierung ein Etikett bzw. ein Folienausschnitt, der auf der B-Seite aufgeklebt wird. Vorzugsweise ist der Folienausschnitt oder das Etikett eine Metallfolie.

In einer weiteren Variante wird ein Etikett auf der B-Seite aufgebracht und ein Bereich des Etiketts mit einer Metallbeschichtung bedruckt. In dieser Variante erfolgt die größte Kapazitäts- oder Induktionsänderung zwischen der Metallbeschichtung und dem angrenzenden Bereich des Etiketts, und die für die kapazitive oder induktive Messung erforderliche "Markierung" ist die Metallbeschichtung und nicht das Etikett. In dieser Variante fungiert das Etikett nur als Träger der Metallbeschichtung, die die kapazitiv oder induktiv zu messende Markierung bildet.

In einer weiteren bevorzugten Ausführungsform ist die Markierung eine aufgedruckte Druckfarbe, vorzugsweise mit Metallpartikeln. Der Druck sollte über den zu bedruckenden Ausschnitt vollflächig und in derselben Schichtdicke erfolgen, um diese Veränderung gut mit der kapazitiven oder induktiven Detektionsvorrichtung detektieren zu können.

Die Veränderung kann verschieden geformt sein, beispielsweise die Form eines Kreises oder eines Rechtecks haben, vorzugsweise weist die Veränderung eine runde Form auf, da so die Lage im Raum mit mehreren kapazitiven oder induktiven Sensoren besser bestimmt werden kann.

Aufgrund der hohen Sensitivität der kapazitiven oder induktiven Detektionsvorrichtung erfolgt die Positionierung in einem Toleranzbereich von ± 0,3 mm bis ± 3 mm.

Im Rahmen der vorliegenden Erfindung wird mit "kapazitive oder induktive Detektionsvorrichtung" eine jede Vorrichtung bezeichnet, die es ermöglicht, die Lage der jeweiligen Veränderungen oder Markierungen auf der B-Seite auf dem flächigen Dekormaterial von der A-Seite des flächigen Materials aus zu bestimmen.

In der einfachsten Variante weist die Detektionsvorrichtung entsprechend der Position einer jeden Veränderung/Markierung jeweils einen kapazitiven oder induktiven Sensor auf und die Fläche des kapazitiven oder induktiven Sensors entspricht in dieser Variante in Form und Größe der Veränderung/Markierung auf der B-Seite. Der kapazitive oder induktive Sensor ist so ausgerichtet, dass die Messung senkrecht nach unten, d.h. rechtwinklig zum flächigen Dekormaterial, erfolgt.

Der Sensor wird vorzugsweise mit einem Abstand von 0 mm bis 4 mm über der A-Seite positioniert oder liegt direkt auf der A-Seite auf.

Die Position des flächigen Dekormaterials zu der Detektionsvorrichtung wird nun verändert, d.h. das flächige Dekormaterial in xy-Ebene verschoben, bis alle Sensoren beispielsweise eine minimale Kapazität oder Induktion anzeigen. Zeigen alle Sensoren beispielsweise eine minimale Kapazität oder Induktion an, bedeutet das, dass sich alle Sensoren direkt oberhalb einer leitfähigen Veränderung befinden.

Als kapazitive Detektionsvorrichtung können alle geeigneten kapazitiven Sensoren zum Einsatz kommen, wie beispielsweise kapazitive Abstandssensoren, kapazitive Näherungsschalter oder Spaltsensoren. Die Messrichtung des Sensors kann nahezu 360° um den Sensor herum betragen oder in einem gerichteten elektrischen Feld erfolgen.

Als induktive Detektionsvorrichtung können alle geeigneten induktiven Sensoren zum Einsatz kommen, wie beispielsweise Differentialtransformatoren, induktive Wegaufnehmer, induktive Abstandssensoren oder Wirbelstromsensoren.

In einer bevorzugten weiteren Variante kann die Genauigkeit des Verfahrens zur Positionierung dadurch erhöht werden, dass die kapazitive oder induktive Detektionsvorrichtung in Bezug auf jede zu messende Veränderung/Markierung wenigstens ein Sensorpanel umfasst. Ein jedes Sensorpanel weist vorzugsweise wenigstens drei kapazitive oder induktive Sensoren auf. Je mehr Sensoren zur Bestimmung der genauen Lage einer Veränderung bzw. Markierung vorgesehen sind, desto genauer kann die Lage der Veränderung detektiert werden.

Die kapazitiven oder induktiven Sensoren sind vorzugsweise auf einer mit der äußeren Form der Veränderung/Markierung korrespondierenden Linie in der kapazitiven oder induktiven Detektionsvorrichtung angeordnet, ähnlich einem Markierungskreis einer Dosenlibelle, bei der die Gasblase mittig in dem Markierungskreis zu liegen kommen sollte. Für eine hohe Genauigkeit sollte sich der Messbereich der einzelnen Sensoren wenigstens teilweise überschneiden. Wird nun das flächige Dekormaterial zwischen der kapazitiven oder induktiven Detektionsvorrichtung mit den verschiedenen Sensorpanels und dem Trägerteil verschoben, so ist die richtige Position in Bezug auf eine Veränderung/Markierung beispielsweise dann erreicht, sobald alle Sensoren des Sensorpanels zur Detektion dieser Veränderung eine gleich hohe Kapazität oder Induktion detektieren.

Ist nur ein Sensor pro Veränderung oder Markierung vorgesehen, wobei die Fläche des Sensors in Form und Größe der Veränderung/Markierung entspricht, so ist die richtige Position in Bezug auf eine Veränderung/Markierung beispielsweise dann erreicht, wenn der Sensor eine minimale oder maximale Kapazität oder Induktion anzeigt.

Eine richtige Positionierung des flächigen Materials in Bezug auf alle Veränderungen ist erreicht, wenn alle Sensoren aller Sensorpanels eine minimale oder maximale Kapazität oder Induktion detektieren.

Das Erreichen der richtigen Position kann über ein visuelles und/oder akustisches Signal angezeigt werden.

Um die Position des Trägerteils gegenüber der Position der kapazitiven oder induktiven Detektionsvorrichtung exakt zu definieren, wird das Trägerteil vorzugsweise in eine Positionieraufnahme eingelegt. Die Detektionsvorrichtung ist an der Positionieraufnahme befestigt, derart, dass sich die Detektionsvorrichtung nicht gegenüber der Positionieraufnahme seitlich (xy-Richtung), d.h. in der Verschiebeebene des flächigen Materials, verschieben lässt.

Zwischen dem in der Positionieraufnahme eingelegten Trägerteil und der Detektionsvorrichtung wird nun das flächige Material seitlich, d.h. in der Ebene des flächigen Materials (xy-Ebene) hin und her bewegt, bis die Detektionsvorrichtung die gewünschten Kapazitäts- oder Induktionsmesswerte anzeigt. Ist die gewünschte Position gefunden, wird die Position mit einer Datenverarbeitungseinrichtung gespeichert und das flächige Material dann auf das Trägerteil kaschiert.

Vorzugsweise ist das Einlegen des Trägerteils in die Positionierform, das Einbringen der Veränderungen auf der B-Seite des flächigen Materials und ggf. das Aufbringen der Markierungen auf der B-Seite und das Positionieren des flächigen Materials unter Messung der Kapazitäten oder Induktion und das nachfolgende Kaschieren automatisiert.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische und schematische Darstellung des erfindungsgemäßen Verfahrens und des Aufbaus,
Figur 2 eine Draufsicht auf die B-Seite eines flächigen Materials mit einer Veränderung und Markierungen und
Figur 3 eine schematische Darstellung der gemessenen Signalpegel der einzelnen Sensoren der kapazitiven oder induktiven Detektionsvorrichtung in Abhängigkeit von der Lage einer Veränderung.

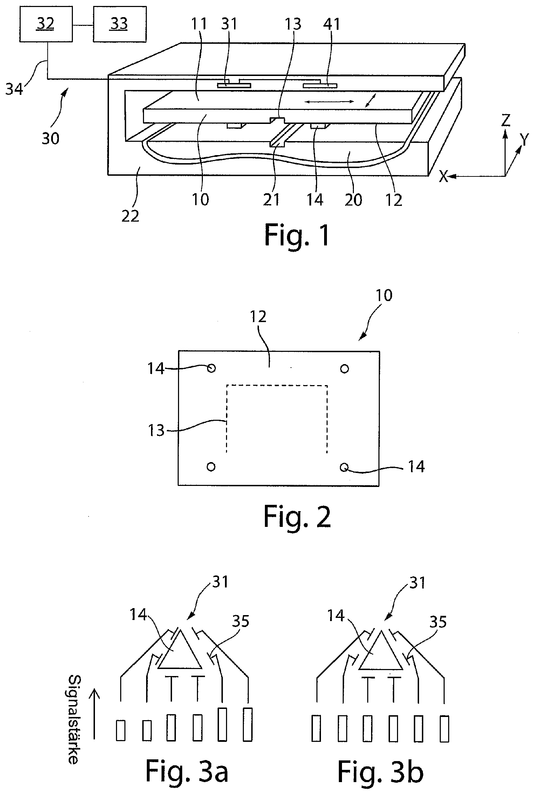

In **Figur 1** sind schematisch ein flächiges Dekormaterial 10, mit einer A-Seite 11 und einer B-Seite 12, ein Trägerteil 20 und eine kapazitive oder induktive Detektionsvorrichtung 30 dargestellt. Das Trägerteil 20 ist in eine Positionieraufnahme 22 eingelegt, so dass es nicht verschoben werden kann. Die A-Seite 11 des flächigen Dekormaterials 10 weist in Figur 1 nach oben. Auf die B-Seite 12 des flächigen Dekormaterials 10 ist als Veränderung 13 eine Schwächung eingebracht und Markierungen 14, die von der A-Seite 11 nicht sichtbar sind. Unterhalb der B-Seite 12 des flächigen Dekormaterials 10 befindet sich das Trägerteil 20, welches eine Sollbruchstelle 21 aufweist. Die kapazitive oder induktive Detektionsvorrichtung 30 umfasst ein erstes Sensorpanel 31, ein zweites Sensorpanel 41, eine Datenverarbeitungseinrichtung 32, einen Bildschirm 33 und Leiterbahnen 34.

Die Sensoren 35 der Detektionsvorrichtung 30 weisen in Bezug auf die Positionieraufnahme 22 und damit in Bezug auf das Trägerteil 20 eine definierte Lage auf, insbesondere sind die Sensoren 35 in den Sensorpanels 31, 41 angeordnet, die an der Positionieraufnahme 22 befestigt und gegenüber dieser in z-Richtung nach oben geschwenkt werden kann. Das flächige Material 10 kann in seine Position oberhalb des Trägerteils 20 gebracht werden, dann werden die Sensorpanels 31, 41 mit den Sensoren 35 nach unten in eine zu dem flächigen Material 10 parallelen Lage geschwenkt, die Kapazitäten oder Induktion gemessen und das flächige Material 10 verschoben, bis die gewünschte Position erreicht ist.

Jedes Sensorpanel 31, 41 ist einer bestimmten Markierung 14 oder Schwächung 13 zugeordnet und umfasst mehrere Sensoren 35.

In die B-Seite 12 des flächigen Dekormaterials 10 wird in einem ersten Schritt die Schwächung 13 durch einen Laser, Abtragen oder Verdrängen eingebracht **(****Figur 2****).** Anschließend werden mit einem Drucker (nicht dargestellt) Markierungen 14 mit einer Farbe, die durch kapazitive oder induktive Sensorik erkennbar ist, in einem definierten Abstand zu der Schwächung 13 aufgedruckt.

Die Markierungen 14 sind kreisförmig und weisen einen Durchmesser von 1 mm bis 10 mm auf.

In einer Variante können als Markierungen 14 auch mit einem Stempel dünne Metallfolienausschnitte aufgeklebt werden.

Das flächige Dekormaterial 10 wird mit seiner B-Seite 12 über das Trägerteil 20 gelegt. Die Sensorpanels 31 und 41 der kapazitiven oder induktiven Detektionsvorrichtung 30 befinden sich somit oberhalb der A-Seite 11. Die Lage der Sensorpanels 31 und 41 ist definiert durch die Ausrichtung der Sollbruchstelle 21 des Trägerteils 20. Der Abstand zwischen den Sensorpanels 31 und 41 und der A-Seite 11 beträgt zwischen 0 mm und 5 mm.

Die Sensorpanels 31, 41 messen die Kapazität oder Induktion. Wird das Dekormaterial 10 hin und hergeschoben, so ändert sich die gemessene Kapazität oder Induktion, so dass durch die Messung der Kapazität oder Induktion in unterschiedlichen Positionen die Lage der Veränderung 13 oder der Markierung 14 ermittelt werden kann.

Das gemessene Signal wird über die Leiterbahnen 34 in die Datenverarbeitungseinrichtung 32 übertragen, dort verarbeitet und gespeichert. An einem Bildschirm 33 werden die Signale graphisch dargestellt.

In den **Figuren 3a** und **3b** ist das Messprinzip schematisch dargestellt. Die sechs Sensoren 35 des Sensorpanels 31 sind korrespondierend mit der äußeren dreieckigen Form der Markierung 14 angeordnet.

Die Figur 3a zeigt die einzelnen Messpegel beispielhaft an den Sensoren 35 des ersten Sensorpanels 31. Je näher die Markierung 14 an einem Sensor 35 liegt, desto geringer ist die gemessene Kapazität oder Induktion an diesem Sensor 35. Ist ein Sensor 35 zu weit von der Markierung 14 entfernt, ist die Kapazität oder Induktion hoch (vgl. rechte Seite der Figur 3a). Somit korrelieren die Messwerte mit der Distanz zwischen der Markierung 14 und den Sensoren 35. Werden von den Sensoren 35 eines Sensorpanels 31 unterschiedliche Änderungen der Kapazität oder Induktion gemessen, so wird das flächige Dekormaterial 10 solange verschoben, bis alle Sensoren 35 eine gleich große Kapazität oder Induktion detektieren (Figur 3b).

Sobald alle Sensoren 35 des ersten Sensorpanels 31 eine gleiche Änderung der Kapazität oder Induktion detektieren und gleichzeitig alle Sensoren 35 des zweiten Sensorpanels 41 eine gleiche Änderung der Kapazität oder Induktion detektieren, ist das flächige Überzugsmaterial 10 richtig positioniert. Die Schwächung 13 liegt somit über der Sollbruchstelle 21.

Das flächige Dekormaterial 10 kann nun auf das Trägerteil 20 kaschiert werden. Die Markierungen 14 werden nicht entfernt, so dass mit der kapazitiven oder induktiven Detektionsvorrichtung 30 erneut gemessen und die Position des flächigen Dekormaterials 10 überprüft werden kann.

## Patentansprüche

1. Verfahren zur Positionierung eines flächigen Materials (10), insbesondere eines flächigen Dekormaterials, das eine Sichtseite (A-Seite) (11) und eine der Sichtseite gegenüberliegende Rückseite (B-Seite) (12) aufweist, auf einem Trägerteil (20) im Fahrzeugbau, wobei auf der B-Seite (12) des flächigen Materials (10) wenigstens eine lokal begrenzte Veränderung (13) ein- oder aufgebracht ist,
**dadurch gekennzeichnet,**
**dass** die Position der auf der B-Seite (12) befindlichen Veränderung (13) selbst mittels einer kapazitiven oder induktiven Detektionsvorrichtung (30), oder die Position einer mit der Veränderung (13) korrelierenden, auf der B-Seite (12) befindlichen Markierung (14) mittels einer kapazitiven oder induktiven Detektionsvorrichtung (30) detektiert wird und die detektierte Veränderung (13) oder Markierung (14) in dem flächigen Dekormaterial (10) anschließend in Bezug auf das Trägerteil (20) positioniert wird.

2. Verfahren nach Anspruch 1, **dadurch gekennzeichnet, dass** die kapazitive oder induktive Detektionsvorrichtung (30) auf oder an der A-Seite (11) des flächigen Materials (10) angeordnet ist.

3. Verfahren nach Anspruch 1 oder 2, **dadurch gekennzeichnet, dass** die Position des Trägerteils (20) gegenüber der Position der kapazitiven oder induktiven Detektionsvorrichtung (30) fixiert ist.

4. Verfahren nach einem der vorangegangenen Ansprüche, **dadurch gekennzeichnet, dass** die mit der kapazitiven oder induktiven Detektionsvorrichtung (30) gemessene Position der Veränderung (13) oder Markierung (14) des flächigen Materials (10) in einer Datenverarbeitungsvorrichtung (32) gespeichert wird.

5. Verfahren nach einem der vorangegangenen Ansprüche, **dadurch gekennzeichnet, dass** das flächige Material (10) Kunststofffolie, Bezugsstoff, Textil, Slush, Kunstleder oder faseriges Material, vorzugsweise Naturleder, ist.

6. Verfahren nach einem der vorangegangenen Ansprüche, **dadurch gekennzeichnet, dass** die Veränderungen (13) Materialschwächungen wie Abtragungen, insbesondere Sacklöcher, Schnitte, Perforationen oder Sensoren, insbesondere Drucksensoren, sind.

7. Verfahren nach einem der vorangegangenen Ansprüche, **dadurch gekennzeichnet, dass** die Markierung (14) auf der B-Seite (12) aufgebrachte, verklebte oder anderweitig befestigte Aufkleber, Etiketten, Folienstücke oder aufgedruckte Beschichtungen, beispielsweise Druckfarben oder Lacke, sind.

8. Verfahren nach einem der vorangegangenen Ansprüche, **dadurch gekennzeichnet, dass** die Detektion der Veränderung (13) bzw. Markierung (14) an der B-Seite (12) nicht unter Sicht auf die Veränderung (13) bzw. Markierung (14) erfolgt.

9. Verfahren nach einem der vorangegangenen Ansprüche, **dadurch gekennzeichnet, dass** die Messung der Veränderung (13) bzw. Markierung (14) an der B-Seite (12) durch das Dekormaterial (10) hindurch erfolgt.

10. Verfahren nach einem der vorangegangenen Ansprüche, **dadurch gekennzeichnet, dass** zur Messung der Kapazität oder Induktion einer jeden Veränderung (13) oder Markierung (14) mehrere Sensoren (35) vorgesehen sind, die vorzugsweise auf einer mit der äußeren Form der Veränderung (13) oder Markierung (14) korrespondierenden Linie in der kapazitiven oder induktiven Detektionsvorrichtung (30) angeordnet sind.

11. Verfahren nach einem der vorangegangenen Ansprüche, **dadurch gekennzeichnet, dass** das Trägerteil (20) in eine Positionieraufnahme (22) eingelegt ist und die kapazitive oder induktive Detektionsvorrichtung (30) an der Positionieraufnahme (22) derart befestigt ist, dass sich die kapazitive oder induktive Detektionsvorrichtung (30) nicht gegenüber der Positionieraufnahme (22) seitlich (xy-Richtung), d.h. in der Verschiebeebene des flächigen Materials (10), verschieben lässt.

12. Verfahren nach Anspruch 10 und/oder 11, **dadurch gekennzeichnet, dass** die Messung der Veränderung (13) bzw. Markierung (14) auf der B-Seite (12) des flächigen Materials (10) dadurch erfolgt, dass das flächige Material (10), das sich in xy-Richtung erstreckt, parallel der Messebene der Detektionsvorrichtung (30) unter Messung der Kapazitäten oder der Induktion solange verschoben wird, bis das gewünschte Messergebnis erzielt ist.

13. Verfahren nach Anspruch 10 und Anspruch 12, **dadurch gekennzeichnet, dass** die Verschiebung solange erfolgt, bis alle Sensoren (35) der Detektionsvorrichtung (30) dieselbe oder eine maximale oder eine minimale Induktion oder Kapazität anzeigen.

14. Verfahren nach einem der vorangegangenen Ansprüche, **dadurch gekennzeichnet**, das Veränderungen (13) oder Markierungen (14) von der A-Seite (11) unsichtbar sind.

## Claims

1. A method for positioning a planar material (10) onto a supporting base (20) in the automotive field, in particular a planar decorative material, which has a visible surface (surface A) (11) and a reverse surface (surface B) (12) facing away from the visible surface, said surface B (12) of said planar material (10) having at least one locally delimited modification (13) inserted therein or applied thereon, **characterised in that** the location of the modification (13) present on said surface B (12) is directly detected by means of a capacitive or inductive detection device (30) or **in that** the location of a marking (14) present on the surface B (12) and correlating to the modification (13) is detected by means of a capacitive or inductive detection device (30), and **in that** the detected modification (13) or marking (14) present in the planar decorative material (10) is subsequently positioned with respect to the supporting base (20) .

2. The method as claimed in claim 1, **characterised in that** the capacitive or inductive detection device (30) is disposed on or at the surface A (11) of the planar material (10).

3. The method as claimed in claim 1 or 2, **characterised in that** the location of the supporting base (20) is fixed with respect to the location of the capacitive or inductive detection device (30).

4. The method as claimed in any of the preceding claims, **characterised in that** the position of the modification (13) or marking (14) of the planar material (10) as measured using the capacitive or inductive detection device (30) is stored in a data processing device (32).

5. The method as claimed in any of the preceding claims, **characterised in that** the planar material (10) is a plastic film, a cover fabric, a textile, a slush moulding, imitation leather or fibrous material, preferably genuine leather.

6. The method as claimed in any of the preceding claims, **characterised in that** the modifications (13) are material weakenings such as removals of material, in particular blind holes, incisions, perforations, or sensors, in particular pressure sensors.

7. The method as claimed in any of the preceding claims, **characterised in that** the marking (14) is realised in the form of stickers, labels, pieces of foil applied to, adhered to, or otherwise fastened to the surface B (12) or of coatings, such as printing inks or varnishes printed thereon.

8. The method as claimed in any of the preceding claims, **characterised in that** the detection of the modification (13) or marking (14) present on the surface B (12) is performed without direct visibility of said modification (13) or marking (14) .

9. The method as claimed in any of the preceding claims, **characterised in that** the measurement of the modification (13) or marking (14) present on the surface B (12) is performed through the decorative material (10).

10. The method as claimed in any of the preceding claims, **characterised in that** for measuring the capacity or induction of each modification (13) or marking (14), a plurality of sensors (35) is provided which are preferably disposed on a line within the capacitive or inductive detection device (30) which corresponds to the outer shape of said modification (13) or marking (14).

11. The method as claimed in any of the preceding claims, **characterised in that** the supporting base (20) is inserted into a positioning seat (22) and the capacitive or inductive detection device (30) is fastened on said positioning seat (22) in such a manner that the capacitive or inductive detection device (30) cannot be laterally displaced (xy direction), i.e. in the displacement plane of the planar material (10), with respect to the positioning seat (22).

12. The method as claimed in claim 10 and/or 11, **characterised in that** the measurement of the modification (13) or marking (14) present on the surface B (12) of the planar material (10) is performed by displacing the planar material (10) which extends in the xy direction in parallel to the plane of measurement of the detection device (30), while measuring the capacities or the induction, until the desired measurement result is achieved.

13. The method as claimed in claim 10 and in claim 12, **characterised in that** the displacement is performed until all sensors (35) of the detection device (30) indicate an identical induction or capacity, or a maximum, or minimum, induction or capacity.

14. The method as claimed in any of the preceding claims, **characterised in that** modifications (13) or markings (14) are invisible when regarded from the side of the surface A (11).

## Revendications

1. Procédé destiné à positionner un matériau plan (10), en particulier un matériau décoratif plan, qui présente une face visible (face A) (11) et une face arrière (face B) (12) située à l'opposé de la face visible, sur une pièce de support (20) dans le domaine de la construction automobile, au moins une modification (13) limitée localement étant insérée ou appliquée au niveau de la face B (12) du matériau plan (10), **caractérisé en ce que** l'on détecte, au moyen d'un dispositif de détection (30) capacitif ou inductif, la position de la modification (13) elle-même située sur la face B (12), ou que l'on détecte, au moyen d'un dispositif de détection (30) capacitif ou inductif, la position d'une marque (14) située sur la face B (12) et se trouvant en corrélation avec ladite modification (13), et **en ce que** la modification (13) ou la marque (14) détectée dans le matériau décoratif plan (10) est ensuite positionnée par rapport à la pièce de support (20).

2. Procédé selon la revendication 1, **caractérisé en ce que** le dispositif de détection (30) capacitif ou inductif est disposé sur ou au niveau de la face A (11) du matériau plan (10).

3. Procédé selon la revendication 1 ou 2, **caractérisé en ce que** la position de la pièce de support (20) est fixée par rapport à la position du dispositif de détection (30) capacitif ou inductif.

4. Procédé selon l'une quelconque des revendications précédentes, **caractérisé en ce que** la position de la modification (13) ou de la marque (14) du matériau plan (10) qui a été mesurée grâce au dispositif de détection (30) capacitif ou inductif est stockée dans un dispositif de traitement de données (32).

5. Procédé selon l'une quelconque des revendications précédentes, **caractérisé en ce que** le matériau plan (10) est une feuille de matière plastique, du tissu de revêtement, du textile, du revêtement slush moulding, du cuir artificiel ou du matériau fibreux, de préférence du cuir naturel.

6. Procédé selon l'une quelconque des revendications précédentes, **caractérisé en ce que** les modifications (13) sont des affaiblissements de matière telles que des enlèvements de matière, en particulier des trous borgnes, des coupures, des perforations, ou des capteurs, en particuliers des capteurs de pression.

7. Procédé selon l'une quelconque des revendications précédentes, **caractérisé en ce qu'**en tant que marque (14) sont utilisés des autocollants, des étiquettes, des morceaux de feuille appliqués, collés ou fixés de manière autre sur la face B (12), ou des revêtements imprimés, par exemple des couleurs d'impression ou des laques.

8. Procédé selon l'une quelconque des revendications précédentes, **caractérisé en ce que** la détection de la modification (13) ou de la marque (14) est effectuée sur la face B (12) sans que la modification (13) ou la marque (14) soit visible.

9. Procédé selon l'une quelconque des revendications précédentes, **caractérisé en ce que** la mesure de la modification (13) ou de la marque (14) sur la face B (12) est effectuée à travers le matériau décoratif (10) .

10. Procédé selon l'une quelconque des revendications précédentes, **caractérisé en ce que** pour mesurer la capacité ou l'induction de chaque modification (13) ou marque (14) sont prévus plusieurs capteurs (35) qui sont disposés dans le dispositif de détection (30) capacitif ou inductif, de préférence sur une ligne correspondant à la forme extérieure de ladite modification (13) ou marque (14).

11. Procédé selon l'une quelconque des revendications précédentes, **caractérisé en ce que** la pièce de support (20) est placée dans une réception de positionnement (22) et que le dispositif de détection (30) capacitif ou inductif est fixé sur la réception de positionnement (22) de telle sorte que ledit dispositif de détection (30) capacitif ou inductif ne puisse pas être déplacé de manière latérale (c'est-à-dire en direction xy) par rapport à la réception de positionnement (22), c'est--dire qu'il ne puisse pas être déplacé dans le plan de déplacement du matériau plan (10).

12. Procédé selon la revendication 10 et/ou 11, **caractérisé en ce que** la mesure de la modification (13) ou marque (14) située sur la face B (12) du matériau plan (10) se fait en déplaçant le matériau plan (10), qui s'étend en direction xy, de manière parallèle au plan de mesure du dispositif de détection (30) tout en mesurant les capacités ou l'induction, et ce jusqu'à obtenir le résultat de mesure souhaité.

13. Procédé selon la revendication 10 et la revendication 12, **caractérisé en ce que** le déplacement se poursuit jusqu'à ce que tous les capteurs (35) du dispositif de détection (30) affichent la même induction ou capacité, ou bien une induction ou capacité maximale ou minimale.

14. Procédé selon l'une quelconque des revendications précédentes, **caractérisé en ce que** les modifications (13) ou marques (14) ne sont pas visibles à partir de la face A (11).
